# EUROPEAN PATENT SPECIFICATION

(11) **EP 3 011 830 B1**
(45) Date of publication and mention of the grant of the patent: **08.11.2017**
(21) Application number: 15189823.6
(22) Date of filing: 14.10.2015
(51) Int. Cl.: A01K 1/015

(54) **PREFABRICATED MODULE FOR THE FLOORING OF A STABLE FOR CATTLE**
VORGEFERTIGTES MODUL FÜR DEN BODEN EINES VIEHSTAHLS
MODULE PRÉFABRIQUÉ POUR LE REVÊTEMENT DE SOL D'ÉTABLE POUR LE BÉTAIL

(30) Priority: 21.10.2014 IT BS20140184
(43) Date of publication of application: 27.04.2016
(73) Proprietor: Fattori S.r.l., 25018 Montichiari, Brescia (IT)
(72) Inventor: FATTORI, Davide, I-25018 Montichiari, Brescia (IT)
(74) Representative: Gamba, Alessandro

(56) References cited:
- WO-A1-2009/136376
- WO-A1-2012/004717
- DD-A1- 59 427
- DE-A1- 19 538 058
- DE-U1- 20 220 802
- FR-A3- 2 891 699

## Description

This invention relates to a prefabricated module suitable for constructing the flooring covering a slurry collection tank and/or an outflow channel of slurry from a stable for cattle, and the flooring itself. This invention also covers a tile comprised in said prefabricated module, and a method of construction of the flooring.

In the state of the art, there are well-known floorings for cattle stables obtained by placing a plurality of modules alongside each other. In particular, in the stables these floorings are positioned above the slurry collection tank or above the outflow channel of the slurry, and are crossed by specific openings that allow the passage of the slurry produced by the animals free to move on the flooring so as to temporarily store the slurry, when is subsequently emptied. Thanks to this artifice, the breeder proceeds to cleaning the slurry stored in the slurry collection tank and/or flowed through the slurry outflow channel without disturbing the animals.

Examples of prior art floorings for cattle stables are shown in document DE19538058, and in document WO2009/136376, in document DD59427 and in document FR2891699.

However, the solutions of the prior art are marred by the problem of non-performing the aforesaid drainage of the slurry in an effective manner; in other words, a portion of the slurry, especially that of the solid type, does not reach the slurry tank and/or the outflow channel, failing to pass between the openings of the known modules, and thus accumulating on the flooring where the animals move. This forces the breeder to clean said flooring, disturbing the animals.

In addition, the solutions typical of the prior art have a flooring that often causes traumas to the limbs, and in particular to the hooves, of the cattle. Specifically, in fact, the cattle often are injured, ruining their hooves on the module, typically made of concrete, and in particular on its slurry drain slits, which are deliberately made large to promote the said drainage.

The purpose of this invention is to provide a prefabricated module that solves the above problems and that is particularly effective in draining the slurry, allowing the animals to walk without injury.

This purpose is achieved by a prefabricated module according to claim 1, by a tile according to claim 11, flooring according to claim 12 and by a flooring construction according to claim 13. The dependent claims describe further variants of preferred embodiments.

The characteristics and advantages of the module according to this invention will be apparent from the following description, given by way of non-limiting example, in accordance with the accompanying figures, wherein:

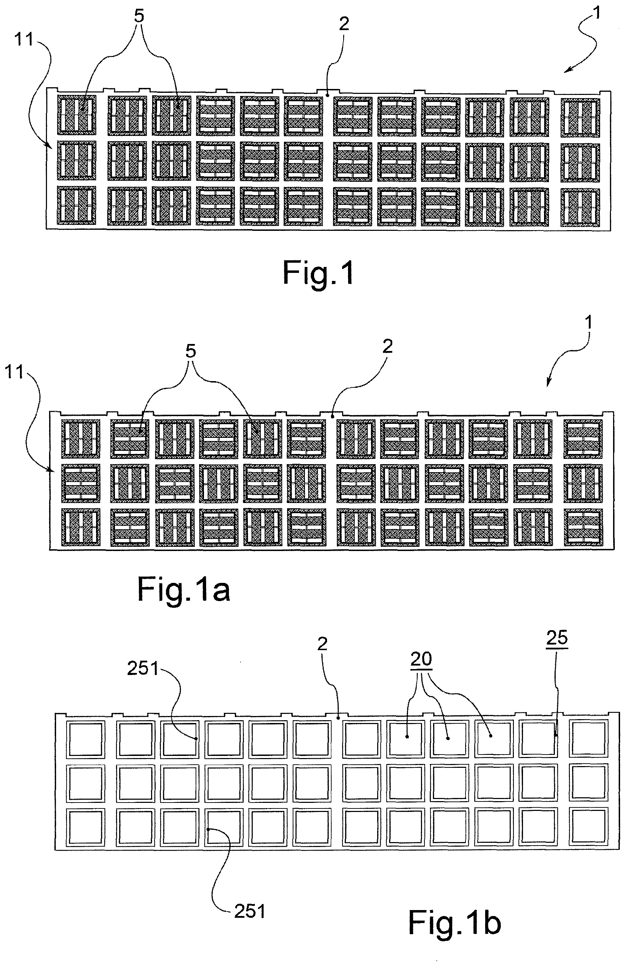

- Figures 1 and 1a represent a top view of a prefabricated module according to a preferred embodiment, with a first arrangement of the tiles, respectively with the tiles arranged according to a first preferred arrangement and a second preferred arrangement;
- Figure 1b shows a top view of the support element part of the prefabricated module of Figures 1 and
- Figure 2 is a section view of the support element of Figure 1;
- Figures 3a and 3b illustrate two perspective views, respectively from above and below, of a tile comprised in the prefabricated module covered by this invention, according to a preferred embodiment;

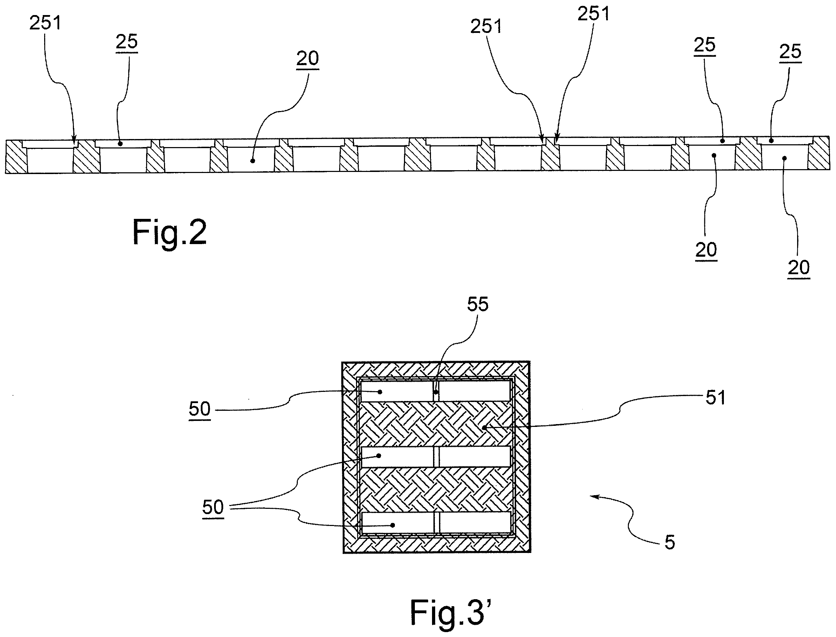

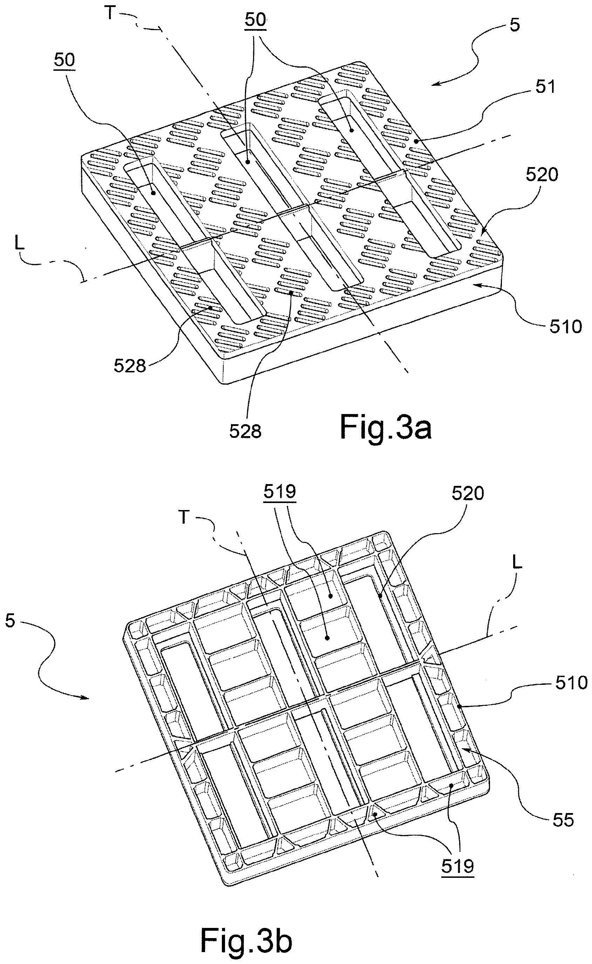

- Figure 3' represents a front view of a tile comprised in the prefabricated module covered by this invention according to a further embodiment of the invention.

In accordance with the accompanying figures, reference number 1 globally indicates a prefabricated module suitable for constructing the flooring covering a slurry collection tank and/or an outflow channel of slurry from a stable for cattle. Preferably, the module 1 has dimensions dictated by the measurements of the slurry tank and/or the slurry channel, for example a module that extends in length by 2.5 m and in width by 1.24 m.

The module 1 has an upper floor face 11, i.e. the face of the module 1 that is treadable and inhabitable by the cattle.

A module 1 according to this invention is basically divided into two main components: a structural support element 2 and tiles 5.

In other words, the module 1 comprises a support element 2, preferably made of concrete.

The support element 2 comprises a plurality of openings 20 that cross it in height suitable to allow the drainage of the slurry.

The support element 2 comprises a plurality of tile housings 25 formed on the upper face 11, in correspondence of each through opening 20.

In other words, on the top of each through opening 20, the support element 2 has a tile housing 25, i.e. a seat, specially shaped in order to house and support the tile 5 at the height of the upper floor face 11.

In yet further other words, the tile 5 is embedded in the support element 2 and is flush with the highest part of it, in such a way as to create a single upper floor face 11, so that there are no steps or differences in level between the tiles 5 and the support element 2 in which, for example, the animals are in danger of stumbling.

Preferably, the tile housing 25 is delimited at the bottom by a support lip 251 on which the respective tile 5, is suitable to rest. Preferably, said support lip 251 projects into the opening 20 toward the centre. Basically, the lip 251 divides the opening 20 and the tile housing 25.

Note that, in the jargon of the field of application of the invention, said support element is also known as a "grille".

For each opening 20, and thus each tile housing 25, the module 1 comprises a respective tile 5.

Each tile 5 has a treadable tile face 51, directly treadable by the cattle.

Furthermore, each tile 5 has a shape complementary to the respective tile housing 25, so as to create a continuous upper floor face 11 without steps or spaces in general.

Each tile 5 has at least one hole 50 suitable to allow the flow of cattle slurry to the through opening 20.

The upper floor face 11 is at least 50% occupied by the set of upper tile faces 51. Preferably, then, that percentage is in favour of the upper tile faces 51. In other words, the surface treadable by the cattle is occupied more by tiles than by the support element 20.

The shape of said through hole 50 is such as to allow a broad and easy flow of slurry without compromising the movement of the animals.

In particular, the surface of each upper tile face 51 is 25% occupied by the at least one hole 50.

The tile 5 comprises a plurality of holes 50 which extend transversely to the tile 5 along a transversal axis T-T. Preferably, each tile 5 includes three holes 50 that extend along the transversal axis T-T.

According to a preferred embodiment, the tile 5 has a support edge 55 suitable to rest on the lip 251, which preferably extends perimetrically. Preferably, said holes 50 extend inside of said rib 55.

The tile 5 has at least one reinforcement rib 55 which extends longitudinally to the tile 5 along a longitudinal axis L-L. In other words, the reinforcement rib 55 is suitable to extend perpendicularly to the holes 50.

In addition, according to a preferred embodiment, the tile 5 comprises a bearing portion 510 engaging the support element 2 in the respective tile housing 25 and an upper support portion 520 treadable by the livestock. Preferably, the two portions have functionality and thus physical characteristics very different from each other.

In fact, the tile 5 must ensure total reliability when stressed in pressure by an animal; preferably, this is ensured by the bearing portion 510.

The tile 5 must also ensure a particular comfort for the animal that treads on it; preferably, this is ensured by the support portion 520.

According to a preferred embodiment, the bearing portion 510 is in a material selected from the group of plastic polymers, preferably, the group of polyamides or polypropylenes, preferably polyamide 6 or polyamide 6.6, or polypropylene copolymer.

Preferably, the bearing portion 510 is obtained by moulding plastic.

Preferably, the bearing portion 510 has inside it, preferably, starting from its bottom, a plurality of lightening cavities 519.

According to a preferred embodiment, the support portion 520 is in a material selected from the group of elastomers, preferably, the group of thermoplastic elastomers, preferably thermosetting polyurethane or polyolefin or moulded-on thermosetting elastomers.

Preferably, the bearing portion 510 and the support portion 520 are intimately in contact; preferably, they are co-moulded.

In a preferred embodiment, the tile 5 has the bearing portion 510 in polyamide 6 or polyamide 6.6 and the support portion 520 in polyurethane.

In a variant embodiment, the tile 5 has the bearing portion 510 in polypropylene copolymer with mineral filler and the support portion 520 in thermoplastic polyolefins or thermoplastic elastomers.

According to a preferred embodiment, the support portion 520 protrudes with respect to the bearing portion 510 in conjunction of the holes 50. In other words, the support portion 520 slightly peripherally occludes the hole 50. Preferably, the support portion 520 bends preventing the hoof of the animals from coming into contact the bearing portion 510. Preferably, the support portion 520 is also, therefore, suitable to favour drainage through the holes 50.

According to a preferred embodiment, the support portion 520 comprises, from the upper tile face 51, a plurality of non-slip protrusions 528, which protrude in height from the upper tile face 51. In other words, the tile 5 is knurled, or has a rough surface, so as to exert a non-slip action in contact with the hoof of the animals. Preferably, said non-slip protrusions 528 extend along the transversal axis T-T, thus being perpendicular to the hoof of the beast when it walks. Preferably, said non-slip protrusions 528 also extend in a direction inclined with respect to said transversal axis T-T, for example at 45°.

The tile 5 and, complementarily, the tile housing 25 have the shape of a regular polygon, preferably a square, or a circle.

Each tile 5 is orientable inside the specific tile housing 25 according to a plurality of positions.

In other words, each tile 5 is insertable in a tile housing 25, preferably placing the holes 50, or complementarily the non-slip protrusions 528, in a preferred direction.

According to a preferred embodiment, the tile 5 has a treadable upper tile face 51 of 0.08 to 0.15 m², preferably 0.11 m², for example in the square embodiment, the tile 5 has a side, substantially of 0.34 m.

In other words, the tile 5 has dimensions such as to contain in its entirety a hoof of a bovine animal of large dimensions, for example a bull or a cow.

Preferably, the lip 251 on which rests the bearing portion 510 is 0.025 m.

Preferably, the structure of the tile 5 described above and its interaction with the support element 2 allows the achievement of capacities of about 400 kg and 600 kg, thus making it absolutely suitable to withstand the weight of a bovine animal.

This invention also covers the method of installation of a flooring covering a slurry collection tank and/or an outflow channel of slurry from a stable for cattle.

Specifically, this method comprises the step of positioning, alongside each other, a plurality of prefabricated modules 1, to complete the coverage of the slurry tank.

For each prefabricated module 1, the performance of the following steps is required:
i) positioning on the collection tank of the slurry and/or the outflow channel of slurry the respective support element 2;
ii) inserting in each tile housing 25 the respective tile 5 according to a preferred orientation.

Preferably, the tiles 5 are arrangeable on the respective support element 2 by the installer according to the needs to be met.

In other words, in assembly operations, depending on the types of farm, and in particular depending on the type of animals, and thus of breeding, the tiles are orientable in a predetermined manner.

In other words, the tiles 5 are suitable to be arranged to constitute housing areas of the animals, and movement corridors. In still further other words, the tiles 5 are arrangeable to identify areas where the animals remain static, such as near a feeding trough, or areas where the animals walk.

Innovatively, the prefabricated module according to this invention allows the achievement of the predetermined purpose of the invention, namely to provide a prefabricated module in which the drainage of slurry is performed extremely efficiently, while ensuring a safe and non-traumatic movement of the animals on of it.

Advantageously, the prefabricated module has a surface widely covered by tiles, in which there are drainage holes.

Moreover, advantageously, the prefabricated module is suitable to be installed based on the needs. In other words, advantageously, the installer has the ability to determine the orientation of the tiles, thus creating specific transit corridors for the animals, for example, central to the stable, or specific rest or feed trough areas, for example, near the feed trough or rest area of the animals. In fact, the animals feel the orientation of the tiles with their hooves and get used to moving according to their arrangement; in particular, the foot of the cow is generally arranged perpendicular to the hole(s); in other words, the animals are led to move in the direction of the longitudinal axis L-L. Or, still advantageously, mixed floorings are realisable, i.e., with tiles arranged completely oriented perpendicular to each other, for example in the realisation of boxes for bulls, in which they must have the greatest possible freedom of movement.

A further advantage, lies in the fact that the width of the tile allows the full support of the hoof of the animals, thus providing the animal greater grip and comfort.

A still further advantage lies in the fact that the module always has a portion in concrete treadable by the animals, which in any case allows the continuous consumption of the hooves of the animals.

Note that the traumatic portion of this type of flooring for the animal, specifically of its hooves, is that directly linked to the slurry drain holes and, in particular, the edges that delimit the holes, which in the products covered by this invention often cause breakage of the nail being in concrete. Advantageously, the slurry drain holes are instead formed directly on the tiles that, being made of plastic, are suitable to avoid injuring the hooves of the animals.

Moreover, advantageously, the symmetric geometry of the tiles allows supporting great capacities, for example due to the weight of the animals, or vehicles such as, for example, tractors.

A further advantage lies in the fact that the tiles are suitable to be inserted in specific tile housings, in such a way that the animal is unable to remove them with the hoof. In particular, in fact, the bearing portion is reinforced in such a way that the tile is removable only if extracted by an action perpendicular to the respective tile housing.

It is clear that one skilled in the art, in order to meet specific needs, may make changes to the module, tile or method of construction described above, all contained within the scope of protection defined by the following claims.

## Claims

1. Prefabricated module (1) suitable to modularly constitute a flooring covering a slurry collection tank and/or an outflow channel of slurry of a stable for cattle, having an upper floor face (11) treadable by the livestock, comprising:
- a support element (2) in concrete, having a plurality of openings (20) crossing it in height, and comprising a plurality of tile housings (25) made on the support element (2) on the upper face (11), at each through opening (20);
- a plurality of tiles (5) of a number corresponding to the tile housings (25), housed therein, each tile (5) having a treadable tile face (51);
the prefabricated module is **characterized by** the fact that each tile (5) is embedded in the support element (2) and is flush with the highest part of it, to create a single upper floor face (11), wherein the upper floor face (11) is at least 50% occupied by the set of upper tile faces (51) leaving always a portion of the support element (2) treadable by the livestock;
wherein each tile (5) has a shape complementary to the respective tile housing (25) wherein the tile (5) and, in a complementary manner, the tile housing (25), have the shape of a regular polygon, preferably a square, wherein each tile (5) has a plurality of holes (50) suitable to allow the flow of cattle slurry to the through opening (20), wherein each hole (50) extend transversely to the tile (5) along a transversal axis (T-T) and wherein the tile (5) has at least one reinforcement rib (55) which extends longitudinally to the tile (5) along a longitudinal axis (L-L);
wherein the orientation of the tiles (5) creates specific transit corridors for the animals which feel the orientation of the tiles with their hooves and get used to moving according to said orientation, wherein said longitudinal axis (L-L) is parallel to the direction wherein the animals are led to move, and the transversal axis (T-T) is perpendicular to said longitudinal axis (L-L).

2. Prefabricated module (1) according to claim 1, wherein the surface of each upper tile face (51) is 25% occupied by the at least one hole (50).

3. Prefabricated module (1) according to any of the previous claims, wherein a tile (5) has a treadable upper tile face (51) of 0.08 to 0.15 m², preferably 0.11 m², for example in the square embodiment the tile (5) has a side, substantially of 0.34 m.

4. Prefabricated module (1) according to any of the previous claims, wherein the tile (5) comprises a bearing portion (510) engaging the support element (2) in the respective tile housing (25) and an upper support portion (520) treadable by the livestock.

5. Prefabricated module (1) according to claim 4, wherein the bearing portion (510) is in a material selected from the group of plastic polymers, preferably, the group of polyamides or polypropylenes, preferably polyamide 6 or polyamide 6.6, or polypropylene copolymer.

6. Prefabricated module (1) according to any of the claims 4 or 5, wherein the bearing portion (510) has inside it, preferably, starting from its bottom, a plurality of lightening cavities (519).

7. Prefabricated module (1) according to any of the claims from 4 to 6, wherein the support portion (520) is in a material selected from the group of elastomers, preferably, the group of thermoplastic elastomers, preferably thermosetting polyurethane or polyolefin or moulded-on thermosetting elastomers.

8. Prefabricated module (1) according to any of the claims from 4 to 7, wherein the support portion (520) comprises a plurality of non-slip protrusions (528) extending in height from the upper tile face (51).

9. Prefabricated module (1) according to any of the claims from 4 to 8, wherein the bearing portion (510) and the support portion (520) are intimately in contact, preferably they are co-moulded.

10. Prefabricated module (1) according to any of the previous claims, wherein the tile housing (25) is delimited at the bottom by a support lip (251) on which the respective tile (5), preferably, with the bearing portion (510), is suitable to rest, preferably, the lip is 0.025 m.

11. Perforated and orientable tile (5) for a prefabricated module (1) according to any of the previous claims, wherein the tile (5) has a complementary shape to the respective housing (25) and wherein the tile (5) and, in a complementary manner, the tile housing (25), have the shape of a regular polygon, preferably a square;
wherein each tile (5) comprises a plurality of holes (50) suitable to allow the flow of cattle slurry to the through opening (20), wherein each hole (50) extends transversely to the tile (5) along a transversal axis (T-T) and at least one reinforcement rib (55) which extends longitudinally to the tile (5) along a longitudinal axis (L-L);
wherein the orientation of the tiles (5), in the tile housing (25), creates specific transit corridors for the animals which feel the orientation of the tiles with their hooves and get used to moving according to said orientation, wherein said longitudinal axis (L-L) is parallel to the direction wherein the animals are led to move, and the transversal axis (T-T) is perpendicular to said longitudinal axis (L-L).

12. Flooring covering a slurry collection tank and/or an outflow channel of slurry from a stable for cattle, comprising at least one prefabricated module (1) according to any one of the previous claims 1 to 10.

13. Construction method of a flooring covering a slurry collection tank and/or an outflow channel of slurry from a stable for cattle, comprising the steps of:
- positioning, alongside each other, a plurality of prefabricated modules (1) according to any of the claims from 1 to 10;
wherein for each prefabricated module (1) the performance of the following steps is required:
i) positioning on the collection tank of the slurry and/or the outflow channel of slurry the respective support element (2);
ii) inserting in each tile housing (25) the respective tile (5) according to a preferred orientation.

## Patentansprüche

1. Vorgefertigtes Modul (1), welches dafür geeignet ist, modular einen Bodenbelag zu bilden, welcher einen Gülleaufnahmebehälter und/oder einen Gülleabflusskanal eines Viehstalls bedeckt, welcher eine obere Bodenfläche (11) aufweist, welche von dem Viehbestand betretbar ist, umfassend:
- ein Tragelement (2) aus Beton, welches eine Mehrzahl von Öffnungen (20) aufweist, welche es in einer Höhe kreuzen, und eine Mehrzahl von Plattengehäusen (25) umfasst, welche an jeder Durchgangsöffnung (20) an dem Tragelement (2) an der oberen Fläche (11) ausgebildet sind;
- eine Mehrzahl von Platten (5) einer den Plattengehäusen (25) entsprechenden Anzahl, welche darin aufgenommen sind, wobei jede Platte (5) eine betretbare Plattenfläche (51) aufweist;
wobei das vorgefertigte Modul durch die Tatsache gekennzeichnet ist, dass jede Platte (5) in dem Tragelement (2) eingebettet ist und bündig mit dessen höchstem Teil ist, um eine einzige obere Bodenfläche (11) zu schaffen, wobei die obere Bodenfläche (11) wenigstens zu 50 % von dem Satz oberer Plattenflächen (51) eingenommen ist, wobei immer ein Abschnitt des Tragelements (2) durch den Viehbestand betretbar bleibt;
wobei jede Platte (5) eine Form aufweist, welche komplementär zu dem jeweiligen Plattengehäuse (25) ist, wobei die Platte (5) und in einer komplementären Weise das Plattengehäuse (25) die Form eines regelmäßigen Polygons, vorzugsweise eines Quadrats, aufweisen, wobei jede Platte (5) eine Mehrzahl von Löchern (50) aufweist, welche dafür geeignet sind, den Fluss von Stallgülle zu der Durchgangsöffnung (20) zu ermöglichen, wobei sich jedes Loch (50) transversal zu der Platte (5) entlang einer transversalen Achse (T-T) erstreckt und wobei die Platte (5) wenigstens eine Verstärkungsrippe (55) aufweist, welche sich longitudinal zu der Platte (5) entlang einer longitudinalen Achse (L-L) erstreckt;
wobei die Ausrichtung der Platten (5) spezifische Transitkorridore für die Tiere schafft, welche die Ausrichtung der Platten mit ihren Hufen spüren und sich daran gewöhnen, sich gemäß der Ausrichtung zu bewegen, wobei die longitudinale Achse (L-L) parallel zu der Richtung ist, in welche die Tiere geführt werden, sich zu bewegen, und die transversale Achse (T-T) lotrecht zu der longitudinalen Achse (L-L) ist.

2. Vorgefertigtes Modul (1) nach Anspruch 1, wobei die Fläche jeder oberen Plattenfläche (51) zu 25 % von dem wenigstens einen Loch (50) eingenommen ist.

3. Vorgefertigtes Modul (1) nach einem der vorhergehenden Ansprüche, wobei eine Platte (5) eine betretbare obere Plattenfläche (51) von 0,08 bis 0,15 m², vorzugsweise von 0,11 m², aufweist, zum Beispiel in der Quadratausführungsform der Platte (5) eine Seite im Wesentlichen von 0,34 m aufweist.

4. Vorgefertigtes Modul (1) nach einem der vorhergehenden Ansprüche, wobei die Platte (5) einen Anlageabschnitt (510) umfasst, welcher mit dem Tragelement (2) in dem jeweiligen Plattengehäuse (25) und einem oberen Tragabschnitt (520), welcher durch den Viehbestand betretbar ist, in Eingriff steht.

5. Vorgefertigtes Modul (1) nach Anspruch 4, wobei der Anlageabschnitt (510) aus einem Material ist, welches aus der Gruppe von Kunststoffpolymeren, vorzugsweise der Gruppe von Polyamiden oder Polypropylenen, vorzugsweise Polyamid 6 oder Polyamid 6.6, oder Polypropylencopolymer ausgewählt ist.

6. Vorgefertigtes Modul (1) nach einem der Ansprüche 4 oder 5, wobei der Anlageabschnitt (510) in seinem Inneren, vorzugsweise von seinem Boden beginnend, eine Mehrzahl von gewichtsreduzierenden Hohlräumen (519) aufweist.

7. Vorgefertigtes Modul (1) nach einem der Ansprüche 4 bis 6, wobei der Tragabschnitt (520) aus einem Material ist, welches aus der Gruppe von Elastomeren, vorzugsweise der Gruppe von thermoplastischen Elastomeren, vorzugsweise duroplastisches Polyurethan oder Polyolefin, oder angeformten duroplastischen Elastomeren ausgewählt ist.

8. Vorgefertigtes Modul (1) nach einem der Ansprüche 4 bis 7, wobei der Tragabschnitt (520) eine Mehrzahl rutschfester Erhebungen (528) umfasst, welche sich von der oberen Plattenfläche (51) in die Höhe erstrecken.

9. Vorgefertigtes Modul (1) nach einem der Ansprüche 4 bis 8, wobei der Anlageabschnitt (510) und der Tragabschnitt (520) in engem Kontakt stehen, vorzugsweise zusammen geformt sind.

10. Vorgefertigtes Modul (1) nach einem der vorhergehenden Ansprüche, wobei das Plattengehäuse (25) an dem Boden durch eine Traglippe (251) begrenzt ist, auf welcher die jeweilige Platte (5), vorzugsweise mit dem Anlageabschnitt (510) geeignet ist, aufzuliegen, wobei die Lippe vorzugsweise 0,025 m ist.

11. Perforierte und ausrichtbare Platte (5) für ein vorgefertigtes Modul (1) nach einem der vorhergehenden Ansprüche, wobei die Platte (5) eine zu dem jeweiligen Plattengehäuse (25) komplementäre Form aufweist und wobei die Platte (5) und in einer komplementären Weise das Plattengehäuse (25) die Form eines regelmäßigen Polygons, vorzugsweise eines Quadrats, aufweisen;
wobei jede Platte (5) eine Mehrzahl von Löchern (50), welche dafür geeignet sind, den Fluss von Stallgülle zu der Durchgangsöffnung (20) zu ermöglichen, wobei sich jedes Loch (50) transversal zu der Platte (5) entlang einer transversalen Achse (T-T) erstreckt, und wenigstens eine Verstärkungsrippe (55) umfasst, welche sich longitudinal zu der Platte (5) entlang einer longitudinalen Achse (L-L) erstreckt;
wobei die Ausrichtung der Platten (5) in dem Plattengehäuse (25) spezifische Transitkorridore für die Tiere schafft, welche die Ausrichtung der Platten mit ihren Hufen spüren und sich daran gewöhnen, sich gemäß der Ausrichtung zu bewegen, wobei die longitudinale Achse (L-L) parallel zu der Richtung ist, in welche die Tiere geführt werden, sich zu bewegen, und die transversale Achse (T-T) lotrecht zu der longitudinalen Achse (L-L) ist.

12. Bodenbelag, welcher einen Gülleaufnahmebehälter und/oder einen Gülleabflusskanal eines Viehstalls bedeckt, umfassend wenigstens ein vorgefertigtes Modul (1) nach einem der Ansprüche 1 bis 10.

13. Konstruktionsverfahren eines Bodenbelags, welcher einen Gülleaufnahmebehälter und/oder einen Gülleabflusskanal eines Viehstalls bedeckt, umfassend die folgenden Schritte:
- Positionieren einer Mehrzahl vorgefertigter Module (1) nach einem der Ansprüche 1 bis 10 längsseits zueinander;
wobei für jedes vorgefertigte Modul (1) die Durchführung der folgenden Schritte erforderlich ist:
i) Positionieren des jeweiligen Tragelements (2) auf dem Gülleaufnahmebehälter und/oder dem Gülleabflusskanal;
ii) Einsetzen der jeweiligen Platte (5) in jedes Plattengehäuse (25) gemäß einer bevorzugten Ausrichtung.

## Revendications

1. Module préfabriqué (1) approprié pour constituer de manière modulaire un revêtement de sol recouvrant un réservoir de collecte de lisier pâteux et/ou un canal d'évacuation de lisier pâteux d'une étable pour le bétail, présentant une face de sol supérieure (11) pour le passage du bétail, comprenant :
- un élément support (2) en béton, présentant une pluralité d'ouvertures (20) le croisant en hauteur, et comprenant une pluralité de logements de dalle (25) fabriquée sur l'élément support (2) sur la face supérieure (11), à chaque ouverture traversante (20) ;
- une pluralité de dalles (5) d'un nombre correspondant aux logements de dalle (25), logée dans ceux-ci, chaque dalle (5) présentant une face de dalle pour le passage (51) ;
le module préfabriqué est **caractérisé par le fait que** chaque dalle (5) est intégrée dans l'élément support (2) et est alignée avec la partie la plus haute de celui-ci, pour créer une face de sol supérieure unique (11), dans lequel la face de sol supérieure (11) est au moins occupée à 50 % par l'ensemble de faces de dalle supérieures (51) laissant toujours une partie de l'élément support (2) pour le passage du bétail ;
dans lequel chaque dalle (5) présente une forme complémentaire au logement de dalle respectif (25) dans lequel la dalle (5) et, de manière complémentaire, le logement de dalle (25), sont sous forme de polygone rectangulaire, de préférence un carré, dans lequel chaque dalle (5) présente une pluralité de trous (50) appropriée pour permettre l'écoulement de lisier pâteux du bétail vers l'ouverture traversante (20), dans lequel chaque trou (50) s'étend transversalement vers la dalle (5) le long d'un axe transversal (T-T) et dans lequel la dalle (5) présente au moins une nervure de renfort (55) qui s'étend longitudinalement vers la dalle (5) le long d'un axe longitudinal (L-L) ;
dans lequel l'orientation des dalles (5) crée des couloirs de transit spécifiques pour les animaux qui sentent l'orientation des dalles avec leurs sabots et s'habituent à se déplacer suivant ladite orientation, dans lequel ledit axe longitudinal (L-L) est parallèle à la direction dans laquelle les animaux sont amenés à se déplacer, et l'axe transversal (T-T) est perpendiculaire audit axe longitudinal (L-L).

2. Module préfabriqué (1) selon la revendication 1, dans lequel la surface de chaque face de dalle supérieure (51) est occupée à 25 % par l'au moins un trou (50).

3. Module préfabriqué (1) selon l'une quelconque des revendications précédentes, dans lequel une dalle (5) présente une face de dalle supérieure pour le passage (51) de 0,08 à 0,15 m², de préférence 0,11 m², par exemple dans le mode de réalisation carré, la dalle (5) présente un côté, sensiblement de 0,34 m.

4. Module préfabriqué (1) selon l'une quelconque des revendications précédentes, dans lequel la dalle (5) comprend une partie palier (510) venant en prise avec l'élément support (2) dans le logement de dalle respectif (25) et une partie support supérieure (520) pour le passage du bétail.

5. Module préfabriqué (1) selon la revendication 4, dans lequel la partie palier (510) est un matériau choisi parmi le groupe des polymères plastiques, de préférence le groupe des polyamides ou polypropylènes, de préférence de copolymère polyamide 6 ou polyamide 6,6, ou polypropylène.

6. Module préfabriqué (1) selon l'une quelconque des revendications 4 ou 5, dans lequel la partie palier (510) présente en elle, de préférence, à partir de son fond, une pluralité de cavités d'allégement (519).

7. Module préfabriqué (1) selon l'une quelconque des revendications 4 à 6, dans lequel la partie support (520) est un matériau choisi parmi le groupe des élastomères, de préférence le groupe des élastomères thermoplastiques, de préférence du polyuréthane ou de la polyoléfine thermodurcissable ou des élastomères thermodurcissables surmoulés.

8. Module préfabriqué (1) selon l'une quelconque des revendications 4 à 7, dans lequel la partie support (520) comprend une pluralité de saillies anti-glissement (528) s'étendant en hauteur depuis la face de dalle supérieure (51).

9. Module préfabriqué (1) selon l'une quelconque des revendications 4 à 8, dans lequel la partie palier (510) et la partie support (520) sont intimement en contact, de préférence, elles sont co-moulées.

10. Module préfabriqué (1) selon l'une quelconque des revendications précédentes, dans lequel le logement de dalle (25) est délimité au fond par une lèvre de support (251) sur laquelle la dalle respective (5), de préférence, avec la partie palier (510), est adaptée pour reposer, de préférence, la lèvre est de 0,025 m.

11. Dalle perforée et orientable (5) pour un module préfabriqué (1) selon l'une quelconque des revendications précédentes, dans laquelle la dalle (5) présente une forme complémentaire au logement respectif (25) et dans laquelle la dalle (5) et, de manière complémentaire, le logement de dalle (25) sont sous forme d'un polygone rectangulaire, de préférence un carré ;
dans laquelle chaque dalle (5) comprend une pluralité de trous (50) appropriée pour permettre l'écoulement de lisier pâteux de bétail vers l'ouverture traversante (20), dans laquelle chaque trou (50) s'étend transversalement vers la dalle (5) le long d'un axe transversal (T-T) et au moins une nervure de renfort (55) qui s'étend longitudinalement vers la dalle (5) le long d'un axe longitudinal (L-L) ;
dans laquelle l'orientation des dalles (5), dans le logement de dalle (25) crée des couloirs de transit spécifiques pour les animaux qui sentent l'orientation des dalles avec leurs sabots et s'habituent à se déplacer en fonction de ladite orientation, dans laquelle ledit axe longitudinal (L-L) est parallèle à la direction dans laquelle les animaux sont amenés à se déplacer, et l'axe transversal (T-T) est perpendiculaire audit axe longitudinal (L-L).

12. Revêtement de sol recouvrant un réservoir de collecte de lisier pâteux et/ou un canal d'évacuation de lisier pâteux d'une étable pour bétail, comprenant au moins un module préfabriqué (1) selon l'une quelconque des revendications 1 à 10.

13. Procédé de construction d'un revêtement de sol recouvrant un réservoir de collecte de lisier pâteux et/ou un canal d'évacuation de lisier pâteux d'une étable pour bétail, comprenant les étapes suivantes :
- le positionnement, côte à côte, d'une pluralité de modules préfabriqués (1) selon l'une quelconque des revendications 1 à 10 ;
dans lequel pour chaque module préfabriqué (1) la réalisation des étapes suivantes est requise :
i) le positionnement sur le réservoir de collecte du lisier pâteux et/ou le canal d'évacuation de lisier pâteux de l'élément support respectif (2) ;
ii) l'insertion dans chaque logement de dalle (25) de la dalle respective (5) en fonction d'une orientation préférée.
